# EUROPEAN PATENT APPLICATION

(11) **EP 2 006 593 A1**
(43) Date of publication of application: **24.12.2008**
(21) Application number: 08104486.9
(22) Date of filing: 20.06.2008
(51) Int. Cl.: F16L 53/00, F24H 1/10

(54) **Piping Structure of Heating/Heat-retaining Tube**

(30) Priority: 21.06.2007 JP 2007163413
(71) Applicant: Nitta Moore Company, Osaka-shi Osaka 556-0022 (JP)
(72) Inventor: Sawada, Kazunori, Nabari-shi Mie 518-0605 (JP)
(74) Representative: von Ahsen, Erwin-Detlef

(57) **Abstract**

A piping structure of a tube (1) for heating or heat-retaining of fluid such as gas and liquid includes at least one conduit (10) through which fluid is transported and one or more heater line(s) (HL) inserted into each conduit (10), in which the heater lines (10) are connected in parallel. The piping structure (1) is capable of transporting fluid over a long distance while heating the fluid or keeping the temperature of the heated fluid constant even when the total piping length is long.

## Description

### BACKGROUNG OF INVENTION

### Field of the Invention

The present invention relates to a piping structure of a tube for heating or heat-retaining of fluid such as gas and liquid which flows in the tube.

### Description of the Related Art

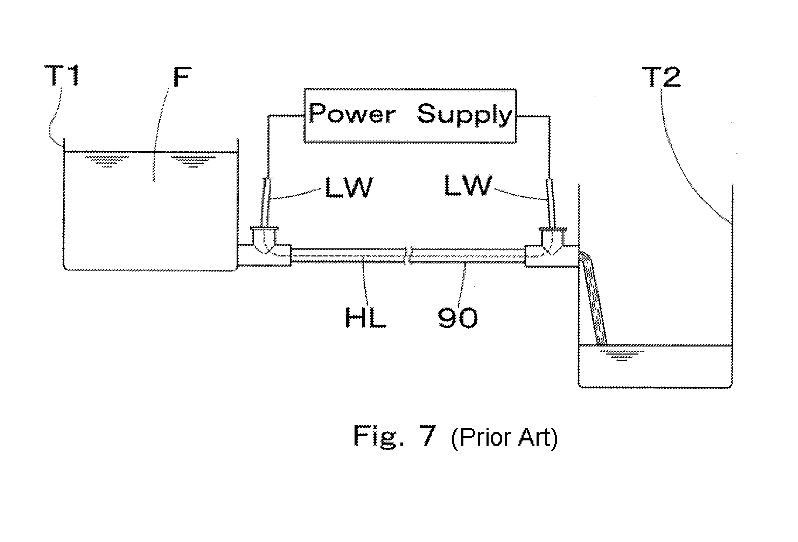

As a conventional piping structure of a tube for heating or heat-retaining of fluid flowing in the tube, such a piping structure, for example, as shown in FIG. 7, has been known. The piping structure includes a conduit 90 through which the fluid F is transported, a heater line HL inserted into the conduit 90, and lead wires LW which are electrically connected to the power supply for transmitting power to the heater line HL at both ends of the conduit 90, so that the fluid in the conduit 90 is heated to a predetermined temperature while the fluid is transported from a tank T1 positioned in a higher position to a tank T2 positioned in a lower position (for example, Japanese Patent Application Laid-Open *(kokai)* No. 2005-351333).

However, if a long tube or conduit is required to connect the devices that are widely separated, a heater line which is provided into the tube is also required to be made long in the total length. Therefore, since the resistance value becomes higher as the total length of the heater line gets longer, when the power supply voltage is constant, the electric current value and, by extension, the heating value are reduced, in turn leading to the decrease in the efficiency of heating or heat-retaining of the gas or liquid flowing in the tube. As a result, the conventional piping structure of the tube has a difficulty in transporting fluid over a long distance while heating the fluid or keeping the temperature of the heated fluid constant.

### SUMMARY OF THE INVENTION

Therefore, it is an object of the present invention to provide a piping structure of a tube which is capable of transporting fluid over a long distance while heating the fluid or keeping the temperature of the heated fluid constant even when the total piping length is long.

In order to achieve the above mentioned object, the piping structure of a tube for heating or heat-retaining of fluid according to the present invention includes at least one conduit through which fluid such as gas or liquid is transported and one or more heater line(s) inserted into each conduit, wherein the heater lines are connected in parallel.

According to the invention there are at least two heater lines; one conduit with two ore more heater lines inserted into the conduit or two or more conduits with at least one heater line inserted into each conduit. The heater lines may be inserted into the conduits one after the other when viewed in the direction of the flow of the fluid. Therefore a high heating value and high efficiency of heating or heat-retaining of the fluid are achieved. Fluid may be transported over a long distance while heating the fluid or keeping the temperature of the heated fluid constant.

The piping structure of the tube for heating or heat-retaining of fluid may further include at least one tube joint wherein a plurality of conduits are connected with each other by the tube joint, and wherein lead wires for transmitting power to the heater lines are connected to the heater lines through the tube joint.

Further, in the above described piping structure of the tube, the heater line which is inserted into the conduit from one side may be extended to the tube joint which is connected to the conduit at the other side or may be extended to the following conduit through the tube joint.

Furthermore, any of the above described piping structures of the tube may include at least one heater line having a different heat value compared to the heat value of an other heater line.

### BRIEF DESCRIPTION OF THE DRAWINGS

FIG. 1 is an overall view of a piping structure of tubes for heating or heat-retaining of fluid according to a first embodiment of the present invention;
FIG. 2 is a partial cross sectional view of the tube for heating or heat-retaining of fluid;
FIG. 3 is a cross sectional perspective view of a connecting structure between the tubes;
FIG. 4 is an enlarged view of a connecting structure between the heater line and the lead wire;
FIG. 5 is an overall view of a piping structure of tubes according to another embodiment of the present invention;
FIG. 6 is an overall view of a piping structure of tubes according to another embodiment of the present invention; and
FIG. 7 is an overall view of a piping structure of a conventional tube according to the prior art.

### DESCRIPTION OF THE PREFERRED EMBODIMENTS

Hereinafter, the present invention will be described in accordance with drawings of embodiments thereof.

### (First Embodiment)

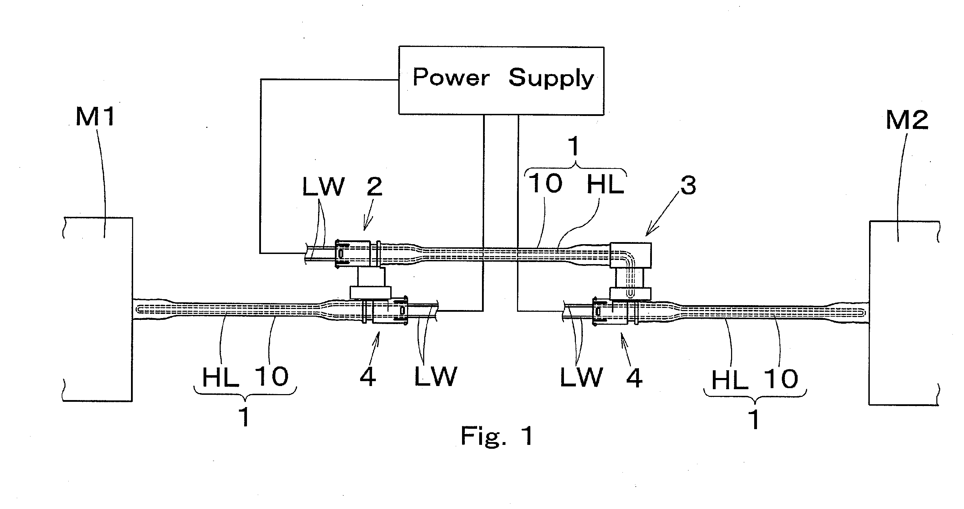

As shown in FIG. 1, the piping structure according to the present embodiment includes three tubes 1 between a device M1 and a device M2 for heating up fluid to a predetermined temperature while transporting the fluid from the device M1 to the other device M2, three heater lines HL respectively inserted into the tubes 1 and three lead wires LW respectively connected with the heater lines HL. The heater lines HL are connected in parallel to a power supply via lead wires LW. The heat value of the heater lines HL connected in parallel is calculated by 3V²/R where the voltage of the power supply is V, the resistance of the heater line HL is R, and the voltage V is always constant, and this value is nine times higher than the heat value of the heater lines HL in serial connection which is calculated by V²/3R.

Such piping structure where a plurality of the heater lines HL and tubes 1 are used to extend the entire length of the piping structure and the heater lines HL are connected in parallel, makes it possible to transport fluid over a long distance while keeping the temperature of the fluid constant or heating the fluid with maintaining the heat value even when the voltage of the power supply is constant.

If a single long conduit is used, it is difficult for a worker to install the conduit especially in a narrow space where many devices or equipments are located.
However, when a plurality of conduits which are connected with each other by tube joints as described above are used, it becomes easy to install or handle the conduits even in the narrow space. Moreover, even in the case that one of the heater lines in the conduits is required to be exchanged due to the rupture or the like, the replacement work is easy since the worker does not have to disconnect all the conduits but disconnect only the corresponding conduit in which the ruptured heater line is provided.

As shown in FIG. 1, the tube 1 is comprised of a conduit 10 and a heater line HL inserted into the conduit 10. The center tube 1 of the three tubes 1 is provided with tube joints 2 and 3 at both ends of the conduit 10, and the right and left tubes 1, 1 are provided with tube joints 4, 4 respectively at one end of the conduits 10, 10. The tube joints 2 and 3 of the center tube 1 and the tube joints 4, 4 of the right and left tubes 1, 1 are coupled mutually to form one long passage for heating or heat-retaining of fluid while transporting the fluid from the device M1 to the other device M2.

The conduit 10 is designed to transport fluid such as gas or liquid and is composed of resin (for example, fluorine resin) or metal.

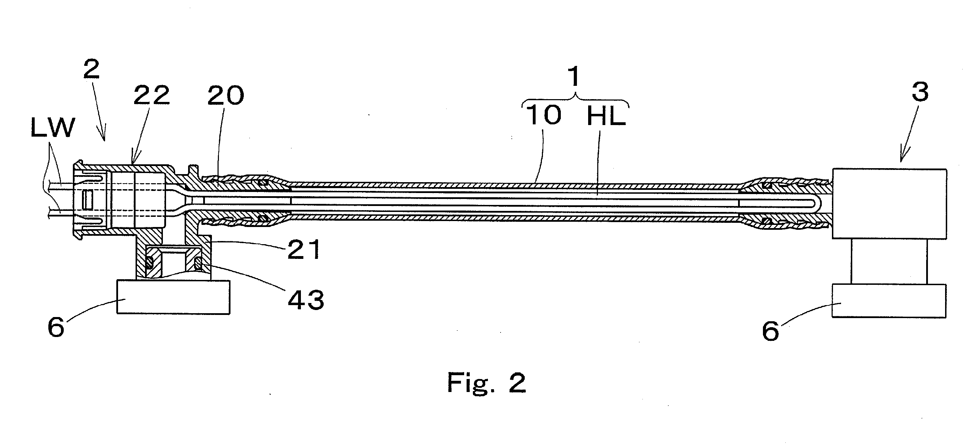

As shown in FIG. 2, one end of the heater line HL is inserted into the conduit 10 from the tube joint 2 and extended to near the connecting part between the tube joint 3 and the conduit 10 (inside of a bamboo shoot shaped joint section 20 of the tube joint 3). At the connecting part, the heater line HL is folded back to return into the tube joint 2 and is electrically connected to the lead wire LW, which transmits power to the heater line HL.

As the heater line HL, a nichrome wire may be used, and the heat value (wattage or watt density) of the heater line HL is set to a predetermined value depending on operating conditions and the voltage of the power supply, so that the heating or heat-retaining capacity always falls within a permissible range. The heat value can be set by adjusting the length of the tube 1 and the resistance value of the heater line HL.

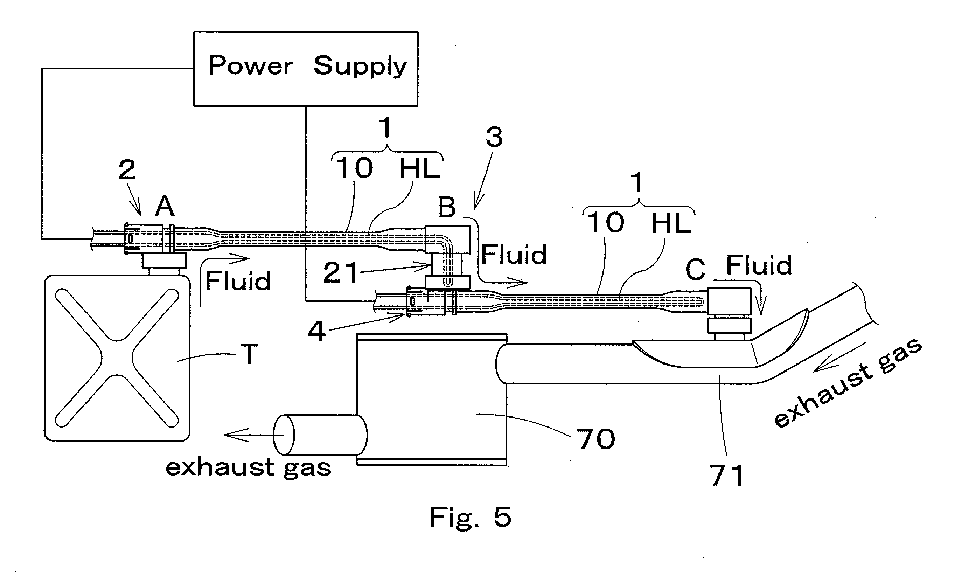

As an example of use, a plurality of the heater lines HL whose heat value per meter is adjusted to, for example, 20 watts per meter, are inserted into a plurality of tubes 1. In this case, since the set heat value of 20 watts per meter is maintained throughout the entire connected tubes 1, a long-distance transportation of the fluid is possible without lowering the temperature of the fluid. Since various types of heater lines HL having different heat values can be combined freely; therefore, if any conduit 10 has to be installed where the conduit is locally heated by an external heat source, another heater line HL having a lower heat value can be installed in the corresponding conduit to control the temperature. For example, as shown in FIG. 5, in the case where a urea aqueous solution is to be transported from a liquid tank T to an exhaust air purifying system 70, it is assumed that the surface temperature of a tube 1 between A and B near the liquid tank T is -20°C, and that a tube 1 between B and C, which is installed in the vicinity of an exhaust tube 71 heated by exhaust gas, is heated to a surface temperature of +20°C by the radiation heat of the exhaust tube 71. In this case, into the tube 1 between A and B, a heater line HL whose heat value is relatively high may be inserted, so that the solution in the environment of -20°C can be heated to a certain temperature at which the solution is prevented from freezing, while into the tube 1 between B and C, a heater line HL whose heat value is relatively low may be inserted, so that the solution heated by the radiation heat is prevented from boiling. As described above, since the heat value of the heater line HL can be adjusted in accordance with the thermal influence from outside, the product lifecycle of the tube 1 can be extended, and the deterioration of the fluid can be prevented.

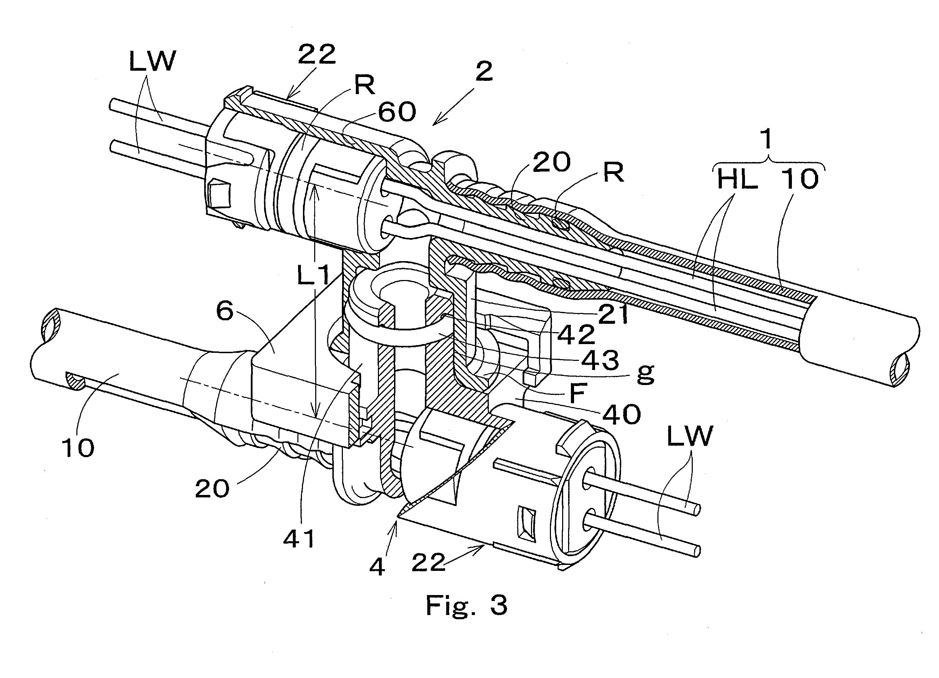

The tube joint 2 is composed of resin (for example, polyamide resin) or metal and, as shown in FIG. 3, includes a bamboo shoot shaped joint section 20 to which a conduit 10 is attached, a tube section 21 provided orthogonally to the axial direction of the conduit 10, and a lead wire connecting section 22 where the lead wire LW connected to a power supply and a heater line HL are connected mutually.

There are provided a plurality of circular protruding and enlarged sections on the outer periphery of the bamboo shoot shaped joint section 20. Therefore, the conduit 10 can be reliably connected in a fluid-tight state by attaching an O-ring R or a seal ring R onto the outer periphery of the bamboo shoot shaped joint section 20.

As shown in FIG. 3, the tube section 21 is a female-type circular member in which a circular diameter-enlarged section (flange) F is integrally formed on an outer periphery thereof. A male-type tube section 41 of a tube joint 4, which will be described later, is inserted into the female-type tube section 21. The flange F of the tube section 21 is confined by a retainer 6 in this state, thereby connecting the tube joints 2 and 4 in a retained state.

In order to facilitate heat transfer from the heater lines HL in the both conduits 10 to the fluid, the length (L1) of the tube sections 21 and 41 is set to be as short as possible, thereby reducing the required heat capacity for the fluid. Moreover, in order to improve the heat insulation property of the tube sections 21 and 41, a passage of the fluid is provided at the center of the tube sections 21 and 41 which is far from the outside. The heat insulation property is also maintained by the tube sections 21 and 41, and an air layer in a fitting gap (g) between the tube sections 21 and 41 formed by a rubber sealing 43 attached to the outer peripheral wall of the tube section 41 (the tube sections 21 and 41, and the air layer forms a triple layer as a heat insulating barrier). When above-described structure is employed, a plurality of tubes 1 can be connected with each other without decreasing the temperature of the fluid flowing in the tube sections 21 and 41 due to the external air even in the case that no heater line HL is provided in the tube sections 21 or 41, and stable heating or heat-retaining performance can be maintained over a long distance, and the entire heater system can be also simplified; therefore, cost reduction can be expected.

The lead wire connecting section 22 is a section where the lead wires LW connected to the power supply are led in and connected to the heater line HL, and has a structure in which a main body 61 is fit in a cylinder section 60 which constitutes a part of the tube joint 2.

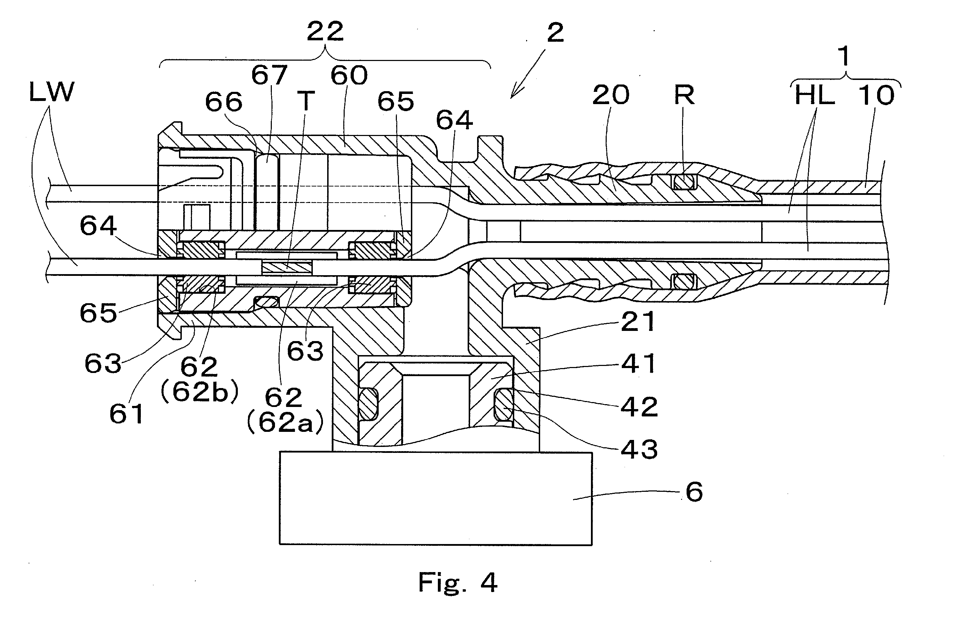

As shown in FIG. 4, the connecting structure between the heater line HL and the lead wires LW in the lead wire connecting section 22 includes: the cylindrical main body 61 housed in the cylinder section 60 having a cylindrical inner peripheral surface in a water-tight state; a through hole 62 extending in the main body 61 in the circumferential axis direction; seal members 63 disposed in the regions on both sides of the through hole 62, respectively; holes 64 formed coaxially with the through hole 62; and retaining members 65 for retaining the seal members 63 in the main body 61. A connecting section T of the heater line HL and the lead wire LW is provided in the space of the through hole 62 between the seal members 63. The heater line HL penetrating through one hole 64 and one seal member 63 is led into the connection section T of the main body 61 from the conduit 10, while the lead wire LW penetrating through the other hole 64 and the other seal member 63 is led out from the connection section T to the power supply side. By virtue of such a connecting structure between the lead wire LW and the heater line HL, when many through holes (like for example holes of a lotus root) are provided in one main body 61, the connecting structure between a lead wire LW and a heater line HL per one line can be formed with a small space, significantly simplifying wire connection and avoiding an unfavorable twist of the lead wire LW and the heater line HL.

The main body 61, as shown in FIG. 4, has a cylindrical shape, which is formed to have a slightly smaller diameter than the inner diameter of the cylinder section 60, with an O-ring groove 66 provided on the outer peripheral surface thereof, wherein an O-ring 67 fits in the O-ring groove 66 to hold the main body 61 and the cylinder section 60 in a fluid-tight state.

The through hole 62, as shown in FIG. 4, has a small-diameter section 62a at the center thereof and large-diameter sections 62b, which are larger than the small-diameter section 62a, on both ends thereof.

The seal members 63 having a ring-like shape are fitted into the large-diameter sections 62b in a tightly sealed state, so that the lead wire LW and the heater line HL can be led into the small-diameter section 62a in a tightly sealed state.

The tube joint 3 is composed of resin (for example, polyamide resin) or metal like the tube joint 2, and connected to a tube joint 4 of a tube 1 on the right side as shown in FIG. 1. The basic structure thereof is the same as that of the tube joint 2 except that no lead wire connecting section 22 is provided. More specifically, the tube joint 3 includes a bamboo shoot shaped joint section 20 to which a conduit 10 is connected, and a tube section 21 provided orthogonally to the axial direction of the conduit 10.

The tube joint 4 is used in combination with the tube joint 2 or 3, is composed of resin (for example, polyamide resin) or metal like the tube joint 2, and includes, as shown in FIG. 3, a bamboo shoot shaped joint section 20 to which a conduit 10 is attached, a tube section 41 provided orthogonally to the axial direction of the conduit 10, and a lead wire connecting section 22 where lead wires LW connected to a power supply and a heater line HL are connected mutually. It is appreciated that, since the bamboo shoot shaped joint section 20 and the lead wire connecting section 22 in the tube joint 4 basically have the same structure as those in the tube joint 2, they are denoted by the same reference numerals.

The tube section 41, as shown in FIG. 3, has a rubber sealing groove 42 provided on the outer periphery thereof, wherein a rubber sealing 43 fits in the rubber sealing groove 42 so that a female-type tube section 21 of the tube joint 2 and a male-type tube section 41 are connected with each other in a fluid-tight state. The tube section 41 is provided with a pedestal 40 to receive the retainer 6, which confines the flange F of the tube section 21 so as to connect the tube joints 2 and 4 in a retained state. The retainer 6 slides on the pedestal 40 in the direction orthogonal to the tube section 41.

The piping structure of the tube according to this embodiment has the following advantages.

Since the piping structure of a tube is configured as described above, the present piping structure is capable of transporting fluid over a long distance while heating the fluid or keeping the temperature of the heated fluid constant even when the total piping length is long. More specifically, since a plurality of heater lines HL are connected in parallel, even when the voltage from a power supply is constant and the total piping length is long, the heat value per one heater line HL can be maintained within a permissible range, thereby allowing long-distance transportation of the fluid. Therefore, the connecting structure of the tube 1 of the present invention has the same principle as that of variable-length heaters, but causes no problem with the variable-length heaters, such as high manufacturing cost, large line diameter or weak mechanical characteristics, thereby improving usability.

Since the outer periphery of the connecting area (tube sections 21 and 41) of the tube joints 2 and 4 or of the connecting area of the tube joints 3 and 4 does not have to be provided with any additional heater device such as heater lines to maintain stable heating or heat-retaining performance of the piping, there is no need to prepare many kinds of heater lines HL having a different resistance value selectively used depending on the total length of the piping, and the work load of piping the tubes can be significantly reduced, thus contributing to cost reduction.

Since the different heater lines HL having the different wattage or watt density can be combined appropriately depending on the situation or the client's needs, and the combination can be easily changed, it becomes possible to find or provide the best combination in a short period of time.

Since various types of heater lines having different heat values can be combined to heat or retain the heat of the gas or liquid that flows in the conduits, if one of the conduits has to be installed where the outer surface of the conduit is locally heated by an external heat source causing thermal damage to the fluid, a heater line having a lower heat value can be installed in this conduit in order to avoid the temperature of the fluid from being too hot, and in turn reducing liquid deterioration. Therefore, there is no need to install the conduit away from the heat source to control the temperature.

### (Other Embodiments)

In the above described first embodiment, the heater line HL, as shown in FIG. 2, has a structure in which it is inserted into the conduit 10 from the tube joint 2 side and bent to return into the tube joint 2, in the vicinity of a connecting section between a tube joint 3 and a conduit 10 (in a telescopic section 20 of the tube joint 3); but the structure is not limited thereto. As shown in FIG. 5, the heater line may be extended to the vicinity of a tube section 21 of the tube joint 3 or even into the following tube joint 4 or a conduit 10 connected thereto(on the right side in the front view). Such a structure can further improve the performance of heating or heat-retaining of the liquid in the tube joints 3 and 4.

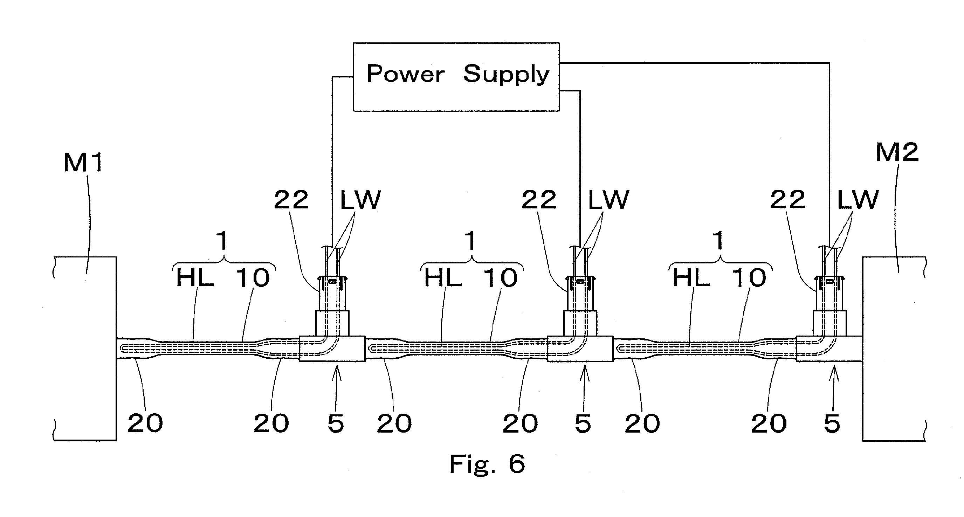

The three tubes 1 shown in the above described first embodiment may be connected via tube joints 5 as shown in FIG. 6 so that the conduits 10 are arranged linearly. The tube joint 5 is a T-shaped joint composed of resin (for example, polyamide resin) or metal, and comprises bamboo shoot shaped joint sections 20 on both sides thereof, to which the conduits 10 are attached, and a lead wire connecting section 22 provided in the direction orthogonal to the axial direction of the conduits 10. It is appreciated that, since the bamboo shoot shaped joint sections 20 and the lead wire connecting section 22 of the tube joint 5 basically have the same structure as those in the tube joint 2, they are denoted by the same reference numerals.

Further, the above described first embodiment employs a combination of the three tubes 1 and heater lines HL having about the same length, but the combination is not limited thereto. The lengths of the tubes 1 or heater lines HL may be different. Regarding the heater lines HL, those of which total length, resistance values and heat values are adjusted as appropriate in accordance with the purpose of use or the usage environment may be used in combination.

Furthermore, in the above described first embodiment, one heater line HL is inserted into each of the tubes 1, but the configuration is not limited thereto. The devices M1 and M2 may be connected by one long tube 1, and a plurality of heater lines HL may be inserted thereinto and connected in parallel to a power supply. In this case, holes for connecting lead wires LW which transmit power to the heater lines HL are provided at predetermined intervals in the tube 1. In addition, the holes are sealed with a material such as nylon or fluorine resin to prevent leakage of gas or liquid.

The above described first embodiment uses liquid as a transported object, but gas can be also used.

Those skilled in the art will appreciate that various adaptation and modifications of the just-described preferred embodiment can be configured without departing from the scope and sprit of the invention. Therefore, it is to be understood that, within the scope of the appended claims, the invention may be practiced other than as specifically described herein.

### Reference numerals :

- 1: tube
- 2: tube joint
- 3: tube joint
- 4: tube joint
- 5: tube joint
- 6: retainer

- 10: conduit

- 20: joint section
- 21: tube section
- 22: connection section

- 41: tube section
- 42: sealing groove
- 43: rubber sealing

- 60: cylinder section
- 61: main body
- 62: through hole

- 62a: small-diameter section
- 62b: large-diameter section

- 63: seal member
- 64: hole
- 65: retaining member
- 66: O-ring groove
- 67: O-ring

- 70: air purifying
- 71: exhaust tube

- M1: divice
- M2: device
- HL: heater line
- LW: lead wire
- T: tank / connecting section
- R: O-ring
- L1: length
- g: fitting gab
- F: flange

## Claims

1. A piping structure of a tube (1) for heating or heat retaining of fluid comprising:
at least one conduit (10) through which fluid is transported; and
one or more heater line(s) (HL) inserted into each conduit (10);
wherein the heater lines (HL) are connected in parallel.

2. The piping structure according to claim 1 further comprising at least one tube joint (2, 3, 4);
wherein a plurality of conduits (10) are connected with each other by the tube joint (2, 3, 4); and
wherein lead wires (LW) for transmitting power to the heater lines (HL) are connected to the heater lines (HL) through the tube joint (2, 3, 4).

3. The piping structure according to claim 2, wherein the heater line (HL) inserted into the conduit (10) from one side are extended to the tube joint (2, 3, 4) connected to the conduit (10) at the other side or extended to the following conduit (10) through the tube joint (2, 3, 4).

4. The piping structure according to any one of claims 1 to 3, further comprising at least one heater line (10) having a different heat value.
